# EUROPEAN PATENT SPECIFICATION

(11) **EP 2 755 536 B1**
(45) Date of publication and mention of the grant of the patent: **29.03.2017**
(21) Application number: 12756502.6
(22) Date of filing: 12.09.2012
(51) Int. Cl.: A47J 31/40, A47J 31/44, A47J 31/52

(54) **MULTI-SYSTEM BEVERAGE MACHINE SAFE CONNECTOR**
SICHERER STECKVERBINDER FÜR GETRÄNKEMASCHINEN MIT MEHRFACHSYSTEM
CONNECTEUR SÉCURISÉ DE DISTRIBUTEUR DE BOISSONS MULTI-SYSTÈME

(30) Priority: 16.09.2011 EP 11181668
(43) Date of publication of application: 23.07.2014
(73) Proprietor: Nestec S.A., 1800 Vevey (CH)
(72) Inventor: YOAKIM, Alfred, CH-1806 St-Légier-La-Chiésaz (CH); AIT BOUZIAD, Youcef, CH-1026 Echandens (CH); PERENTES, Alexandre, CH-1012 Lausanne (CH); PHAN, Minh Quan, CH-1030 Bussigny (CH); AGON, Fabien, Ludovic, CH-1807 Blonay (CH)
(74) Representative: Schnyder, Frank Simon
(86) International application number: PCT/EP2012/067749
(87) International publication number: WO 2013/037782

(56) References cited:
- EP-A1- 2 208 450
- WO-A1-02/097927
- WO-A1-2007/141334
- US-A- 4 361 750
- US-A1- 2004 183 693

## Description

### Field of the Invention

The field of the invention pertains to beverage preparation machines, in particular using capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of tea and coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Typically, beverage preparation machines have a body arranged to circulate a fluid to a connection arrangement having a capsule piercer for connecting a removable support or holder of an ingredient capsule and pierce such capsule during the connection. Liquid is circulated via the connection arrangement into the pierced capsule to form the beverage by mixing the liquid with the ingredient in the capsule. Examples of such beverage machines are disclosed in WO2005/016093 and EP 1 868 473. These two references also disclose the use of different removable supports or holder for use with the same machine body for preparing different kind of beverages.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule.

The actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing.

The actuation of the movable part of the brewing device may be manual. WO 2009/043630 discloses a beverage preparation machine including a brewing unit having a front part with a passage for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing. A pivotable arched handle is configured for driving the front part manually.

WO 2005/004683 and WO 2007/135136 disclose a device comprising a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle is in the form of a lever that is manually pivotable about an end thereof adjacent the machine's housing. In the closed position, the handle may be pivoted down against the machine's housing and over the capsule inlet passage to cover it. In the open position, the handle is pivoted up away from the capsule inlet passage to uncover this passage. Hence, in addition to moving the holding part, the handle serves to cover and uncover the passage for the capsule. The manual force required to move the movable parts varies during closure and opening of the machine and depends on the dimensional tolerances of the capsules used, the positioning of the capsule and the temperature of the brewing unit.

FR 2 554 185 discloses a series of modular elements which can be combined together so as to constitute an espresso coffee beverage system. The modular elements are associated side by side. One element is a coffee producing module. Another element is a steam producing module. Each element comprises an electrical connection.

WO 2007/141334 discloses a modular beverage production system with a docking station and a beverage production module having inter-connected control circuitries. The control circuitry of the module can be disconnected from the circuitry of the docking station for an autonomous control of the module when the module is disconnected from the station.

EP 1 764 014 and WO 2009/074550 disclose a beverage preparation machine having a plurality of brewing units. WO 2009/074555 discloses a beverage preparation machine that has an electrically powered socket for receiving different accessories, such as a milk frothing jug or a cup heater.

### Summary of the Invention

The invention relates to a machine for preparing a beverage from at least one ingredient and dispensing such prepared beverage. For instance, the machine is a coffee, tea, chocolate, cacao, milk and/or soup preparation machine. In particular, the machine is arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage.

Formed and dispensed coffee beverages may be selected from ristrettos, espressos, lungos, cappuccinos, cafe latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 150 ml per serving.

Tea may be dispensed in larger amounts than coffee, e.g. typically between 100 and 300 ml per serving. Chocolate and other beverages, e.g. soup, can be dispensed in the same amount.

When (accumulation) pots are filled for subsequently filling several cups or mugs, the serving may be in the range of 500 to 2000 ml.

In particular, the beverage preparation machine comprises:
- a base having a fluid circuit for conditioning and delivering a fluid via a base outlet and a base data interface, in particular a fluid circuit connected to a fluid source and controlled by a control unit and comprising a pump and/or a thermal conditioner such as a heater and/or a cooler,
- a removable module having a module inlet and a module data interface disconnectably connectable to the base outlet and the base data interface, respectively, in particular a module having a unit for housing an ingredient to be mixed with such fluid.

Typically, such unit is arranged to house a capsule of a flavouring ingredient, e.g. tea, coffee, chocolate, milk, soup, etc. or such flavouring ingredient in loose form. For example, the unit is of the type disclosed in WO 2005/004683, WO 2007/135135, WO 2007/135136, WO 2008/148601, WO 2007/042415, WO 2011/069830 or WO 2011/076750. Suitable examples of capsules and capsule handling mechanisms inside a beverage machine are disclosed in EP 1 859 714, EP 2 103 236, EP 2 205 133, and in the references cited therein. The unit may be a milk frothing arrangement, e.g. with a venturi system, for instance as disclosed in WO 01/26520.

The module's fluid circuit extending from the module's inlet is typically unpowered and passive, in particular without any active (e.g. electric) fluid conditioner such as pump or heater or cooler. Energizing the fluid, e.g. by an active pump or an active heater/cooler, is typically carried out upstream the module, in particular in the base. When the module is configured to participate in the energizing of the fluid, power may be drawn by the module from the base in particular via the data interfaces and/or dedicated energy interfaces, e.g. electric power connectors that can typically be associated with the data interfaces. The module may be powered, e.g. electrically, for carrying out other functions in the module (not actively conditioning the fluid), such as user-interface functions and/or opening and closing of the module, e.g. for the insertion and/or removal of a flavouring ingredient such as an ingredient batch, into the module.

The module is typically removable from the base by a user. It is thus non-permanently connected to the base. In other words, it can be removed and replaced or substituted with another module by a user, e.g. a regular consumer, as a normal operation, i.e. without requiring any special professional skills or tooling as would for instance require a specially trained service or repair person. The module is neither welded nor glued to the base and not assembled thereto by any permanent mechanical assembly the disassembly of which requires a destructive operation, e.g. rivets, or a disassembly step which is non-obvious for a user that is not specially trained.

Hence, the module is arranged to be removable by a user for normal handling of the machine, in particular without special tooling or expert knowledge e.g. as used by servicemen. A reason for such a removal may be servicing or repair of the module and/or the base. Another reason for such a removal may be a substitution of a module of one type by a module of another type, typically for preparing with the same machine base and different types of modules compatible with the base different types of beverages and/or beverages from ingredients supplied to the modules in different types of shapes e.g. within capsules or pods or as loose ingredients, the different types of modules being all compatible for connection and operation with the same base. If follows that the machine with such a base and module(s) provides a great versatility of use of the module(s).

In accordance with the invention: the base has a base connector block for mechanical connection to the module, the base outlet and the base data interface being borne, in particular fixedly borne, by the base connector block; and/or the module has a module connector block for mechanical connection to the base, in particular to a corresponding base connector block, the module inlet and the module data interface being borne, in particular fixedly borne, by the module connector block.

Hence, the connection system of the module and the base can be integrated into a single connector component in the base and/or in the module. A single component may thus carry all the fluid, energy and data connection elements of the module or the base needed for the connection between the module and the base. This facilitates the construction tolerances and force management of the connection and leads to proper connection, especially when some or all of the connected elements (inlet, outlet, data interfaces) are movable relative to their respective base and module.

The base may have a frame to which such base connector block is movably mounted, such as pivotally mounted. Such base connector block can be movable relative to the frame between an unlocked position for connecting and/or disconnecting the module to the base and a locked position for locking the module when connected to the base.

The module may include an ingredient mixing unit that is fixed to such module connector block and that is in fluid communication with the module inlet.

The base data interface and the module data interface can be mechanically connectable and disconnectable along a direction of the connection and disconnection of the base outlet and the module inlet.

By providing a common direction of connection and disconnection of the respective data interfaces and the fluid inlet and outlet of the module and the base, the combined connection system can be physically secured, i.e. proper fluid connection and proper data connection, in one direction only. This improves the connection simplicity and reliability.

In particular, the base outlet and the module inlet define a direction of flow from the base outlet into the module inlet, the flow direction being generally parallel to the connection and disconnection direction.

Hence, the pressure rise at the inlet and outlet caused by the circulation of fluid therein can be absorbed (for instance to prevent disconnection by pressurised fluid circulation) by the same fastening system along the same direction of connection of the inlet and outlet and the respective interfaces.

The beverage preparation machine may comprise a fastener or lock for securing together the base and the module upon connection of the base outlet and module inlet together and the base data interface and the module data interface together. Any fastener or lock may be used, e.g. automatic, semi-automatic or manual fasteners or locks, as known by the skilled person. Such fastener or lock may be mounted to the base and/or to the module and/or to another part of the machine.

The module may comprise a mixing unit downstream the module inlet for holding an ingredient that is mixed downstream the module inlet with fluid fed into the unit via the base outlet and the module inlet to form a mixture that is dispensed via a machine outlet and that is prevented from contacting the base outlet. The module inlet can be in fluid communication with the mixing unit via an anti-return valve and/or via a fluid conduit that has a ratio of length and cross-section that is sufficiently high to prevent a return-flow of the mixture from the mixing unit to the base outlet (under the normal conditions of fluid circulation during use of the beverage preparation machine).

Hence, during mixing of the ingredient in the mixing unit of the module, the formed mixture is prevented from flowing "backwards" to the base, in particular the base outlet, and thus the mixture is prevented from depositing on the base outlet. It follows that when a module is replaced by a replacing module, the replacing module is not contaminated by any mixture from a previous mixing in the previous module and transferred to the replacing module via the base. Hence, the hygiene and repeatability of the prepared beverages is improved.

By providing an appropriate module configuration preventing a return flow to the base outlet, the base is not contaminated by any product produced in the module. This is particularly advantageous when the same base is used with different modules for preparing different beverages: contamination via the base of a mixture formed in the module by another mixture formed with in another module can be prevented.

For instance, when the base is first used with a coffee preparation module and then with a tea preparation module, the tea preparation module (and ultimately the prepared tea) will not be exposed to any contamination by any residual coffee via corresponding coffee deposits on the base from the coffee preparation.

Typically, the module data interface can be arranged to communicate data to the base via the base data interface for parametrizing the conditioning and delivery of fluid from the base outlet into the module inlet.

The module data interface may be arranged to communicate module identification data to the base via the base data interface for identification by the base of a type of the module connected to the base from a plurality of different types of modules, such as different types of modules for processing coffee, tea, milk, chocolate and soup.

The module data interface can be arranged to communicate ingredient identification data to the base via the base data interface for identification by the base of a type of ingredient contained in the module connected to the base from a plurality of different types of ingredients suitable to be processed by the module.

The machine may have a user-interface connected to the module and/or to the base. The base and module data interfaces may be used to communicate user-data from a user-interface on the module to the base and/or to parameterize a user-interface on the base in line with a particular module and/or ingredient used in the module connected to the base.

For instance, the module and base data interfaces comprise cooperating module and base connectors for transmitting data in electric or optical form, in particular for transmitting ingredient identification data.

For example, the module and the base data interfaces comprise cooperating module and base connectors for transmitting data in magnetic and/or mechanical form, in particular for transmitting module identification data.

In a particular embodiment, the machine comprises a plurality of seats for connecting simultaneously a corresponding plurality of modules, in particular by a corresponding plurality of base outlets, module inlets, base interfaces and module interfaces. Optionally, such a seat is connected to a module that is not connected to the base outlet e.g. a user-interface module that is connected to the base via the base and module data interfaces.

Such a base with a plurality of seats may share the same fluid circuit, or part of a fluid circuit e.g. fluid source, pump and/or thermal conditioner, between the different modules connected to the different seats, or the base may have a separate fluid circuits for each seat and connected module. Even in the latter configuration, a single control unit may be used to control all the fluid circuit (s) .

Hence, the same base may be used to combine different beverage preparation systems simultaneously. Moreover, a base may be used with exchangeable different user-interfaces. For instance, the different user-interfaces may be more or less sophisticated or flexible, and/or the may be differently personalized user-interfaces.

The invention also relates to a removable module for connection to a base of a beverage preparation machine as described above. The module has a module inlet and a module data interface disconnectably connectable to a base outlet and to a base data interface, respectively. In accordance with the invention, the module has a module connector block for mechanical connection to the base, in particular to a corresponding base connector block, the module inlet and the module data interface being borne, in particular fixedly borne, by the module connector block.

Another aspect of the invention relates to a base to which is removably connectable a module of a beverage preparation machine as described above. The base has a fluid circuit for conditioning and delivering a fluid via a base outlet and a base data interface disconnectably connectable to a module inlet and a module data interface, respectively, of such module. In accordance with the invention, the base has a base connector block for mechanical connection to the module, the base outlet and the base data interface being borne, in particular fixedly borne, by the base connector block.

The above removable module and/or the above base may include any corresponding feature described in relation with the beverage preparation machine having such a base and such a module, as well as any combination of such features.

### Brief Description of the Drawings

The invention will now be described with reference to the schematic drawings, wherein:
- Figure 1 shows a perspective front and side view of a disconnected module and base of a beverage preparation machine according to invention;
- Figure 2 illustrates the base shown in Fig. 1;
- Figure 3 shows a perspective rear and side view of beverage preparation machine according to invention having a base with a disconnected first module and a connected second module;
- Figure 4 illustrates the base and module shown in Fig. 1 in a connected state;
- Figure 5 shows the same base and module connected and locked;
- Figure 6 illustrates the base with first and second modules of Fig. 3 in a connected and locked state;
- Figure 7 illustrates the base and the first modules of Fig. 6 cooperating with a third module; and
- Figure 8 shows in greater details the third module of Fig. 7.

### Detailed description

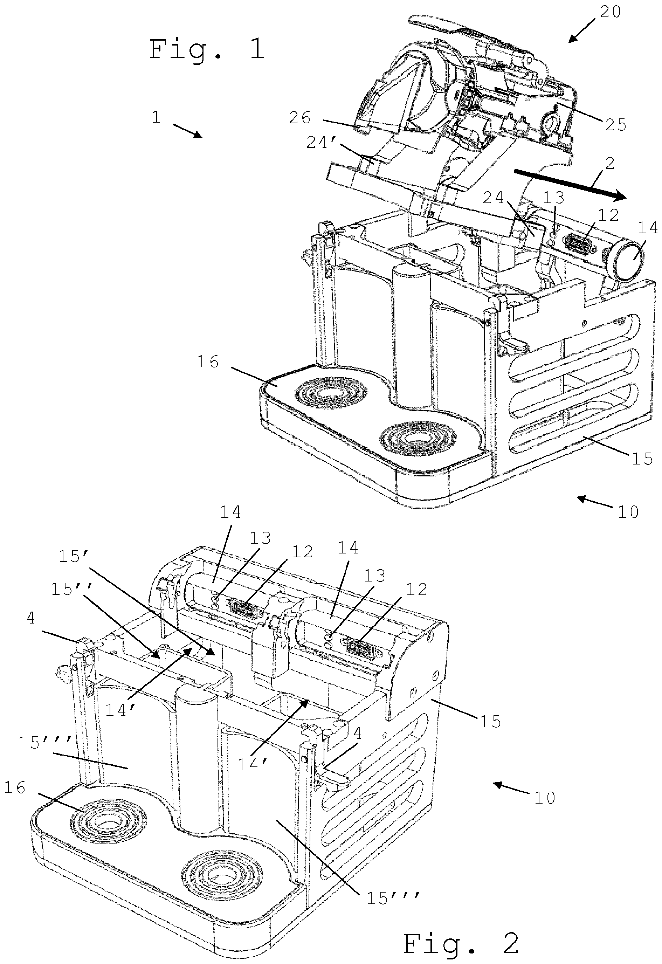

Figures 1 to 8, in which the same references generally designate the same elements, illustrate parts of an exemplary base 10 and/or different modules 20,20',20" in different connection and disconnection configuration of a beverage preparation machine 1 according to the invention. For the purpose of the following illustration of an embodiment of a beverage machine according to the invention, module 20 embodies a coffee preparation module of the type disclosed in WO2007/135136, module 20' embodies a tea preparation module of the type discussed in WO 2007/042415 and WO 2007/134960, and module 20" embodies a milk frothing module of the type disclosed in WO 01/26520. Many different or alternative modules and module types can of course be used within the framework of the current invention.

The illustrated beverage preparation machine 1 comprises a base 10 having a fluid circuit for conditioning and delivering a fluid via a base outlet 11 and a base data interface 12,13, in particular a fluid circuit connected to a fluid source and controlled by a control unit and comprising a pump and/or a thermal conditioner such as a heater and/or a cooler. Machine 1 further comprises a removable module 20 having a module inlet 21 and a module data interface 22,23 disconnectably connectable to base outlet 11 and base data interface 12,13, respectively, in particular a module 20 having a unit for housing an ingredient to be mixed with the fluid.

Base 10 may have a frame 15 delimiting an inner cavity 15'. Frame 15 may form a structure for securing components of base 10, e.g. a pump, heater, control circuit. Frame 15 may be covered by outer panels or housing elements (not shown).

Cavity 15' may contain part or all of the fluid circuit (not shown), such as a pump, heater and/or cooler, tubes, valves, flowmeter, temperature sensor, pressure sensor, fluid connectors, etc... and further components such as a control unit, power management system, etc... Fluid circuits are disclosed in greater details in WO 2009/074550.

The fluid circuit may be associated to a fluid tank, in particular a water tank. Examples of suitable fuid tanks and connections to the fluid circuit are for example disclosed in WO 2010/046442 and WO 2011/089210.

Base 10, in particular a frame 15 thereof, may contain a cavity 15" to which used ingredients and/or waste materials may be evacuated during use. Cavity 15" may cooperate with a removable container 15''' that collects such used ingredients and/or waste materials and that may be emptied whenever necessary. Such systems are for example disclosed in WO 2009/074559, WO 2009/153298 and WO 2011/086087.

Machine 1 can also be associated with a space for placing a receptacle 5,6 for collecting a beverage dispensed from module 20,20',20" . The receptacle may be a user-receptacle such as a cup 5, a mug 6 or a pot, e.g. a tea pot (not shown). The placing space may be formed by a part of machine 1 or by a support surface by which machine 1 is supported. Receptacle placing surfaces are well known in the art, e.g. as disclosed in EP 1 867 260 or in WO 2009/074557. As illustrated in the Figures, a recipient support 16 may be connected to base 10, in particular to frame 15 of base 10.

Module 20 can have a mixing unit, e.g. an ingredient cavity for receiving and housing therein an ingredient supplied into module 20 via an ingredient passage. Module 20 may be configured to circulate a liquid via fluid inlet 21 into the cavity, typically for mixing with the ingredient in particular for brewing the ingredient. The cavity may be configured for holding and housing a flavouring ingredient, such as tea or coffee or chocolate or powder milk.

For instance, mixing unit 25 of removable module 20 has a first part and a second part that delimit a cavity and that are relatively movable between a processing configuration for housing in the cavity the ingredient and a transfer configuration for inserting the ingredient into mixing unit 25 and for evacuation thereof from mixing unit 25. The cavity can be arranged to enclose a capsule containing such ingredient. In the transfer configuration, mixing unit 25 may have: an ingredient insertion channel along which the ingredient is driven by gravity into the cavity prior to mixing; and/or an ingredient evacuation channel along which the ingredient is driven by gravity from the cavity after mixing.

As mentioned above, the ingredient may be inserted pre-portioned within a capsule into this cavity. Such ingredient capsule may be of the type described above under the header "field of the invention".

Modules 20,20' may have a handle 29 for bringing mixing unit 25 from an ingredient mixing configuration to an ingredient insertion/evacuation configuration.

Suitable capsules for modules 20,20' are for example disclosed in EP 0 5 1 2 4 6 8 , EP 0 512 470 and WO 2007/042414. A flavoured beverage may be prepared by circulating a carrier liquid, such as water, into the ingredient cavity to flavour the liquid by exposure to the flavouring ingredient held in the cavity.

The ingredient cavity may be delimited by first and second parts that are relatively movable between a processing configuration for housing therein the ingredient and a transfer configuration for inserting such ingredient into the processing module and/or for evacuation thereof from the processing module. An automatic ingredient recognition system may be used to parameterize and adjust the processing of the ingredient automatically in line with the type of ingredient.

When closed capsules of flavouring ingredients are used, first and second parts delimiting the ingredient cavity may include a capsule opener such as blades and/or a tearing tool, e.g. a plate with a tearing profile, for instance as known from Nespresso™ machines. See for example EP 0 512 468 und EP 0 512 470.

Embodiments of suitable mixing units, e.g. brewing units, and capsule management are for example disclosed in WO 2005/004683, WO2007/135136 and WO 2009/043630.

Moreover, module 20 typically includes a downstream fluid arrangement leading into an outlet 26 for dispensing beverage to a user, e.g. to an area 16 for placing a user-cup 5 or a user-mug 6, the beverage formed in the module's ingredient cavity containing the ingredient mixed with the circulating fluid or liquid, e.g. water. The dispensing area 16 may be delimited at the bottom by a support surface for holding a user cup or mug 5,6. The support surface may be part of base 10 of machine 1. Such support surfaces are well known in the art, e.g. as disclosed in EP 1 867 260 and WO 2009/074557.

Base 10 of beverage machine 1 typically includes one or more of the following components:
a) a fluid circuit, as discussed above and hereafter;
b) a heater and/or cooler for conditioning the temperature of a fluid, e.g. water and/or steam, circulating along the fluid circuit to module 20 via outlet 11, in particular an in-line heater and/or cooler;
c) a pump for pumping the fluid through the heater and/or cooler;
d) one or more fluid connecting members for guiding the fluid from a source of liquid, such as tank of fluid, e.g. liquid such as water;
e) an electric control unit, in particular comprising a printed circuit board (PCB), for receiving instructions from a user via an input user-interface and/or data via data interfaces 12,13 and for controlling the heater and/or cooler and/or the pump; and/or
f) one or more sensors for sensing at least one characteristic selected from characteristics of the heater, cooler, the pump, a liquid tank, an ingredient collector, a flow of the liquid (e.g. by a flowmeter), a pressure of the liquid and a temperature of the liquid, and for communicating such characteristic(s) to the control unit.

Examples of fluid circuits are disclosed in WO 2009/074550 and in WO 2009/130099.

The heater may be a thermoblock or an on demand heater (ODH), for instance an ODH type disclosed in EP 1 253 844, EP 1 380 243 and EP 1 809 151. Control unit configurations and connections are for example disclosed in WO 2009/043851 and WO 2009/043865.

Base data interface 12,13 and module data interface 22,23 may be mechanically connectable and disconnectable along a direction (indicated by arrow 2) of the connection and disconnection of base outlet 11 and module inlet 21.

As mentioned above, by providing a common direction 2 of connection and disconnection of the respective data interfaces 12,13,22,23 and the fluid inlet 21 and outlet 11 of module 20 and base 10, the combined connection system 11,12,13,21,22,23 can be physically secured, i.e. proper fluid connection and proper data connection, in one direction only. This improves the connection simplicity and reliability.

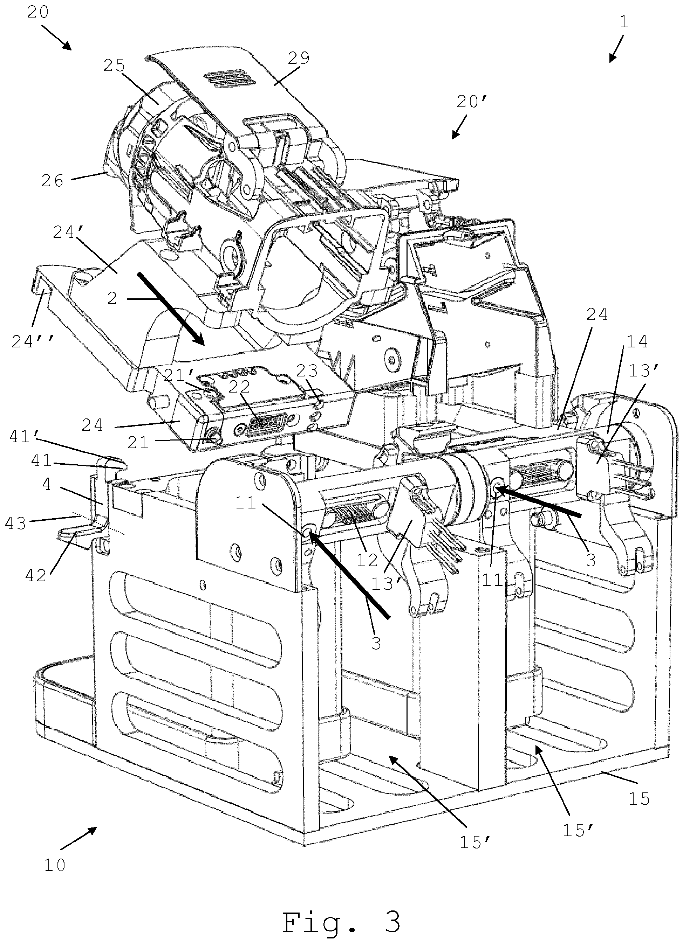

As illustrated in Fig 3, base outlet 11 and module inlet 21, e.g. two tubular sections concentrically joinable end-to-end, have an inner flow configuration that defines a direction of flow (indicated by arrow 3) from base outlet 11 into module inlet 21, i.e. at the junction of outlet 11 and the inlet 21. This flow direction 3 can be generally parallel to the connection and disconnection direction 2.

As discussed above, the pressure increase at inlet 21 and outlet 11 caused by the circulation of fluid therein, e.g. liquid pumped at 5 to 25 bar, can be absorbed (to prevent disconnection by pressurised fluid circulation) by the same fastening system along the same direction of connection of inlet 21 and outlet 11 and the interfaces.

Base 10 can have a base connector block 14, as illustrated in Figs 1 to 5, for mechanical connection to module 20. Base outlet 11 and base data interface 12,13 are borne, in particular fixedly borne, by base connector block 14. As illustrated in Figs 2 and 3, a tubular section forming an outlet 11 extends through connector block 14. Likewise, connection pins 12 extend through block 14. Sensors 13, e.g. Hall sensors, are mounted in block 14 and connected on the other side of block 14 to an electric interface connector 13'.

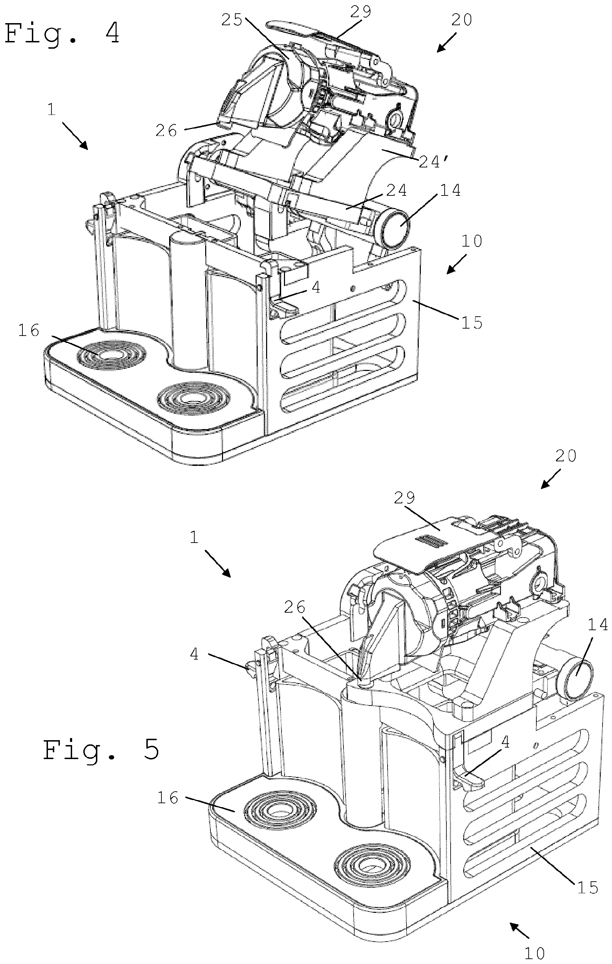

As illustrated in the exemplary embodiment of base 10, a frame 15 is provided to which base connector block 14 is movably mounted. Frame 15 can be stationary and may typically be covered or partly covered by housing sections or panels (not shown). Connector block 14 can be pivotally mounted in or to frame 15. Base connector block 14 may be movable relative to frame 15 between an unlocked position (Figs 3 and 4) for connecting and/or disconnecting module 20 to machine's base 10 and a locked position (Fig. 5) for locking module 20 upon connection to base 10.

Module 20 can have a module connector block 24 for mechanical connection to base 10, in particular to base connector block 14. Module inlet 21 and module data interface 22,23 are borne, in particular fixedly borne, by module connector block 14. As discussed above, module 20 has optionally an ingredient mixing unit 25 that is fixed to module connector block 24 and that is in fluid communication with the module inlet 21. As illustrated connector block 24 is fixed via legs 24' to mixing unit 25 that may be of the type disclosed in WO 2007/135136. Inlet 21 may be an end of a tubular section extending through connector 24 to opening 21' that may be connected by a tube (not shown) to mixing unit 25.

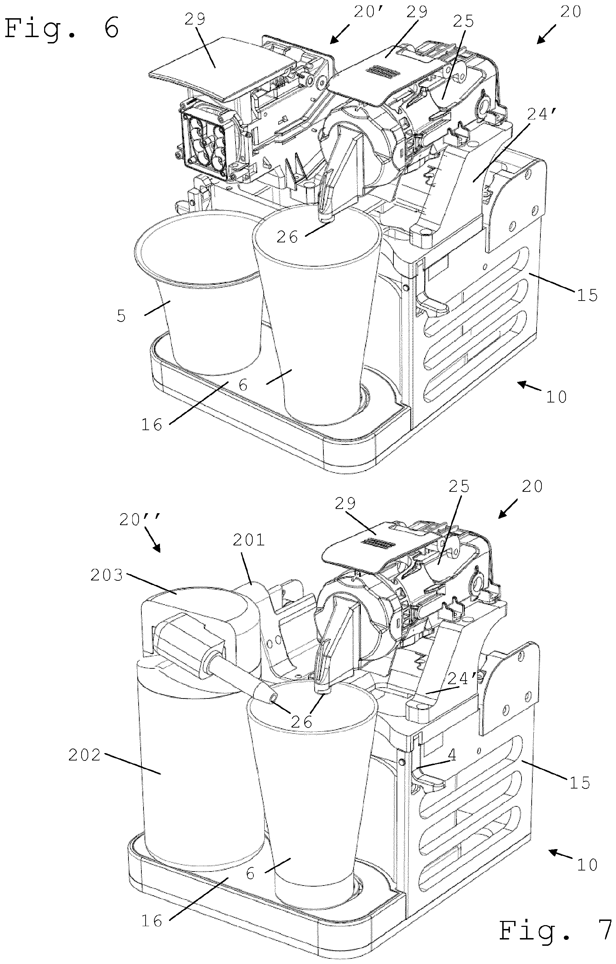

Beverage preparation machine 1 comprises a fastener or lock 4 for securing together base 10 and module 20 upon connection of base outlet 11 to module inlet 21 and base data interface 12,13 to module data interface 22,23, as illustrated in Figs 5 to 7. As shown in Fig. 3, fastener or lock may include at least one latch 4, e.g. a swing latch pivotally mounted to frame 15 about pivot axis 43 indicated in doted lines. Latch 4 has a retainer end or hook 41 and a manual (or automatically driven) actuation end 42. Latch 4 may be elastically constrained into the locking position, e.g. by a spring (not shown). When connector block 24 is moved into the locking position (from Fig. 4 into Fig. 6), connector block 24, e.g. shaped as a foot of module 20) pivots latch 4 aside (clockwise in Fig. 7) by pressing on a bevelled and/or inclined top 41' of hook or retainer 41, which stresses the latch spring. Latch 4 then returns (counter-clockwise in Fig. 7) to enter with hook or retainer 41 into latch receiver 24 " and so fasten module 20 in connection to base 10. To unfasten module 20, the user (or an automatic system) may simply press down actuation end 42 whereby latch 4 is pivoted out of latch receiver 24" to allow upward rotation of connector block 24 and then disconnection thereof from base 10. To facilitate or assist motion of module 20 or connector 14 into the connection and/or disconnection orientation (Fig. 4), a spring (not shown) may be used to bias module 20 into this orientation. For example, such a spring is fixed to connector 14 and frame 15.

Typically, module 20 comprises a mixing unit 25 downstream module inlet 21 for holding an ingredient that is mixed downstream inlet 21 with fluid fed into unit 25 via base outlet 11 and module inlet 21 to form a mixture (typically a beverage) that is dispensed via a machine outlet 26. Mixing unit 25 may be a unit for merely combining ingredients, e.g. milk or water with instant tea, chocolate, coffee or soup. Mixing unit 25 may be a brewing unit, e.g. for extracting flavouring components from an ingredient such as ground coffee or tea leaves.

The fluid fed into unit 25 (via inlet 21) and mixed with an ingredient located in unit 25 is preferably prevented from contacting the base outlet 11. The fluid mixed with the ingredient is preferably prevented from contaminating those parts of base 10 that come into contact with module 20, e.g. outlet 11 and connector 14 as well as interface 12,13, so as to avoid any contaminating transfer of fluid mixed with the ingredient from one module 20 to another module 20,20',20" via base 10 when modules 20,20',20" are exchanged on base 10. For instance, module inlet 21 is in fluid communication with mixing unit 25 via an anti-return valve and/or via a fluid conduit that has a ratio of length and cross-section that is sufficiently high to prevent a return-flow of such mixture (fluid and ingredient) from mixing unit 25 to outlet 11.

Typically, base 10 incorporates a control unit, e.g. processor or controller with various components such as memory chip, clock, sensors, etc... for controlling the fluid circuit of base 10 and constitutive parts thereof. Such control unit is typically connected to interface 12,13 and optionally to a user-interface on base 10 or module 20 for local user-control and/or a network interface for distant control.

Module data interface 22,23 can be arranged to communicate data to the base 10 via base data interface 12,13 for parametrizing the conditioning and delivery of fluid from the base outlet 11 into the module inlet 21. Parameters of different types may be adjusted in line with such communicated data, such as parameters relating to the temperature, pressure, flow rate or even the composition of the fluid conditioned and delivered by base 10 via outlet 11.

Module data interface 22,23 can be arranged to communicate module identification data to base 10 via base data interface 12,13 for identification by base 10 of a type of module 20 connected to base 10 from a plurality of different types of modules 20,20',20" , such as different types of modules for processing coffee, tea, milk, chocolate and soup. Such different modules 20, 20' , 20" may be of the type known in the art, e.g. as indicated in the general description above.

Module data interface 22,23 can be arranged to communicate ingredient identification data to the base 10 via base data interface 12,13 for identification by base 10 of a type of ingredient contained in module 20 connected to the base from a plurality of different types of ingredients suitable to be processed by the module. For instance, the system may be used to identify a particular tea blend or a particular coffee blend of a plurality of available blends or a particular amount of ingredient selected from a plurality of available amounts typically when an ingredient is supplied to module 20 in a preportioned form e.g. within capsules.

As mentioned above, machine 1 may comprise a user-interface (not shown) assembled to module 20 and/or to base 10. Base and module data interfaces 12,13,22,23 may be used to communicate user-data from a user-interface on module 20 to base 10 and/or to parameterize a user-interface on base 10 in line with a particular module and/or ingredient used in the module connected to base 10. For instance, if base 10 accepts a first module 20 for preparing coffee from ground coffee, a second module 20' for preparing tea from tea leaves and a third module 20" for preparing hot and/or frothed milk, a single user-interface unit, e.g. with a screen or a touch screen, may be automatically adapted to the particular characteristics of the different beverages that can be prepared with the different modules 20,20',20", such as the quantity of the beverage and/or the quality of the beverage (froth, crema, temperature...) appropriate for the type of relevant beverage (milk, coffee, tea...).

The module and base data interfaces may comprise cooperating module and base connectors 12,22 for transmitting data in electric or optical form, in particular for transmitting ingredient identification data. Examples of systems for identifying a type of ingredient in a module are disclosed in WO02/28241.

The module and the base data interfaces can comprise cooperating module and base connectors 13,23 for transmitting data in magnetic and/or mechanical form, in particular for transmitting module identification data. Connector 23 may be a magnet arrangement comprising a plurality of magnets, e.g. 0 to 3 magnets as depicted, each module type 20,20',20" having a different arrangement. Connector 13 may include a corresponding sensor arrangement, e.g. a hall sensor arrangement, for detecting the presence and disposition of magnets 23 on module 20.

Connector 13' is arranged to connect sensors 13, e.g. to power and/or transmit signals, to a control unit of base 10.

A beverage preparation machine 1 may comprise more than one seat 14' for receiving a module 20,20',20" . A base 10 with two such seats 14' side-by-side is illustrated in the Figures. Hence, simultaneously, two modules 20,20',20" can be removably mounted onto the same base 10.

The same kind of module may be mounted simultaneously to base 10 so to that more than one beverage of the same type may be prepared and served at a time with a single machine 1.

Different kinds of modules may be mounted simultaneously, e.g. as illustrated in Figs 6 and 7, to be able to prepare different beverages or combination beverages with the same base 10. A module 20,20' may project over a recipient support surface 16, in particular an outlet of module 20,20' may be located above the space for placing a recipient 5,6 as illustrated in Fig. 6.

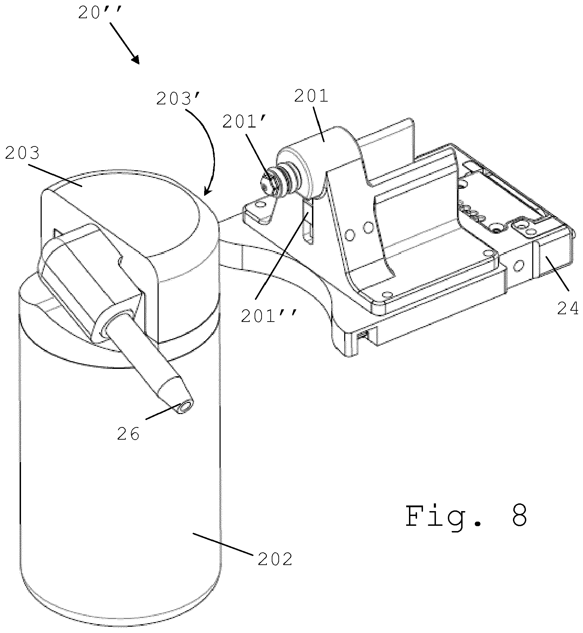

Module 20" shown in Figs 7 and 8 may be arranged for producing conditioned milk, e.g. heated or cooled milk, and/or frothed or non-frothed milk. Module 20" may have an upstream part 201 for the intake of heated or cooled fluid such as water, in particular steam, from base 10 via base outlet 11 and a module inlet. Such a module upstream part 201 may be connected and locked to base 10 following the same principle as discussed above in relation with the connection and locking of module 20. Furthermore, module 20" may have a tank 202 for storing milk, a milk conditioning part 203 for exposing directly or indirectly milk from tank 202 to the fluid from base 10, e.g. in a venturi system contained in conditioning part 203. Module 20" usually includes an outlet 26 for dispensing the conditioned milk, e.g. to a user recipient 6. Suitable milk conditioning systems are for example disclosed in WO 01/26520.

As illustrated in Fig. 8, module 20" may have upstream part 201 that is disconnectably connectable to milk tank 202 and conditioning part 203. Upstream part 201 includes a fluid outlet 201' for circulating fluid to tank 202 and/or part 203 via a corresponding inlet 203' . Tank 202 and part 203 may also be mechanically secured to part 201 via the connection formed by outlet 201' and inlet 203' upon assembly thereof.

Furthermore, upstream part 201 may include a push-button 201" or other interface for setting the characteristics of the desired fluid, e.g. water, delivered from part 201, usually via outlet 201'. Such characteristics may include the temperature (ambient, cooled or heated), physical state (liquid or vapour), pressure of the delivered fluid. The push-button or other interface 201" may be controlled by a corresponding push element or corresponding interface of a device, e.g. tank and part 202,203, connected to the upstream part. The corresponding interface (or push element) of this device may be fixed or may be changed so that the fluid delivered to the same device may be adjusted, e.g. by the user, as desired when the device is versatile. Hence, the device may include a user-interface for inputting the desired characteristics.

The information as to the desired characteristics can then be transmitted to base 10 via data interfaces 12,13, 22,23, as discussed above.

Space 16 for placing a recipient may be used to position a larger module 20" , for example a module for storing and conditioning milk as just described.

When base 10 has more than one seat 14' for connecting modules 20,20',20" , two modules 20,20" may have their respective outlets 26 leading into the same user-recipient 6, as illustrated in Fig. 7. Hence, a combined beverage may be produced and dispensed into the same recipient using two different modules 20,20" . For example, a cappuccino (coffee from module 20 with frothed heated milk from module 20") may be prepared in a mug 6 without moving the mug during the preparation process.

It is also possible to use two (or more) modules of the same type to prepare and dispense in parallel a similar beverage into a single recipient, e.g. to prepare a double espresso by producing simultaneously from two modules single espressos, and have the respective module outlets lead into the same reciptient. Hence, the same time is needed to prepare a single or a double (or multiple) beverage.

Optionally, such a seat 14' may receive a module that is not connected to the base outlet 11 such as a user-interface module that is connected to the base via the base and module data interfaces. Hence, a base 10 with two seats 14' may be connected to a module 20,20',20" of the above type and to another module, e.g. a module that is not used to mix ingredients such as a user-interface module or a network-interface module. When a module is not used for mixing ingredients, the corresponding base outlet 11 will normally not be used for delivering fluid to such a module.

When base 10 is configured to be connected to more than one module 20,20',20" simultaneously, e.g. by having a plurality of seats 14' for mounting such modules, base 10 may have separate fluid circuits, each dedicated to a corresponding module, or base 10 may have fully or partly shared fluid circuits, e.g. a sharing between several modules 20,20',20" of components of the fluid circuit, e.g. a pump and/or a thermal conditioner such as a heater and/or cooler. Examples of shared fluid circuits between different outlets are disclosed in EP 1 764 014.

## Claims

1. A beverage preparation machine (1) comprising:
- a base (10) having a fluid circuit for conditioning and delivering a fluid via a base outlet (11) and a base data interface (12,13), in particular a fluid circuit connected to a fluid source and controlled by a control unit and comprising a pump and/or a thermal conditioner such as a heater and/or a cooler; and
- a removable module (20) having a module inlet (21) and a module data interface (22,23) disconnectably connectable to the base outlet and the base data interface, respectively, in particular a module having a unit for housing an ingredient to be mixed with said fluid,
**characterised in that**:
- the base (10) has a base connector block (14) for mechanical connection to the module (20), the base outlet (11) and the base data interface (12,13) being borne, in particular fixedly borne, by the base connector block (14); and/or
- the module (20) has a module connector block (24) for mechanical connection to the base (10), in particular to a corresponding base connector block (14), the module inlet (21) and the module data interface (22,23) being borne, in particular fixedly borne, by the module connector block (14).

2. The machine of claim 1, wherein the base (10) has a frame (15) to which said base connector block (14) is movably mounted, such as pivotally mounted, said base connector block (14) being in particular movable relative to the frame between an unlocked position for connecting and/or disconnecting the module (20) to the base (10) and a locked position for locking the module when connected to the base.

3. The machine of claim 1 or 2, wherein the module (20) has an ingredient mixing unit (25) that is fixed to said module connector block (24) and that is in fluid communication with the module inlet (21)

4. The machine of any preceding claim, wherein the base data interface (12,13) and the module data interface (22,23) are mechanically connectable and disconnectable along a direction (2) of the connection and disconnection of the base outlet (11) and the module inlet (21), optionally the base outlet (11) and the module inlet (21) defining a direction of flow (3) from the base outlet into the module inlet, the flow direction (3) being generally parallel to the connection and disconnection direction (2).

5. The machine of any preceding claim, which comprises a fastener or lock (4) for securing together the base (10) and the module (20) upon connection of the base outlet (11) and module inlet (21) and the base data interface (12,13) and the module data interface (22,23) in the connection block(s) (14,24).

6. The machine of any preceding claim, wherein the module (20) comprises a mixing unit (25) downstream the module inlet (21) for holding an ingredient that is mixed downstream said inlet with fluid fed into the unit via the base outlet (11) and the module inlet (21) to form a mixture that is dispensed via a machine outlet (26) and that is prevented from contacting the base outlet (11), the module inlet (21) being in particular in fluid communication with the mixing unit (25) via an anti-return valve and/or via a fluid conduit that has a ratio of length and cross-section that is sufficiently high to prevent a return-flow of said mixture from said mixing unit (25) to the base outlet.

7. The machine of any preceding claim, wherein the module data interface (22,23) is arranged to communicate data to the base (10) via the base data interface (12,13) for parametrizing the conditioning and delivery of fluid from the base outlet (11) into the module inlet (21).

8. The machine of any preceding claim, wherein the module data interface (22,23) is arranged to communicate module identification data to the base (10) via the base data interface (12,13) for identification by the base of a type of the module (20) connected to the base from a plurality of different types of modules (20,20',20"), such as different types of modules for processing coffee, tea, milk, chocolate and soup.

9. The machine of any preceding claim, wherein the module data interface (22,23) is arranged to communicate ingredient identification data to the base (10) via the base data interface (12,13) for identification by the base of a type of ingredient contained in the module (20) connected to the base from a plurality of different types of ingredients suitable to be processed by the module.

10. The machine of any preceding claim, which comprises a user-interface connected to the module (20) and/or to the base (10), optionally the base and module data interfaces (12,13,22,23) may be used to communicate user-data from a user-interface on the module to the base and/or to parameterize a user-interface on the base in line with a particular module and/or ingredient used in the module connected to the base.

11. The machine of any preceding claim, wherein the module and base data interfaces comprise cooperating module and base connectors (12,22) for transmitting data in electric or optical form, in particular for transmitting ingredient identification data.

12. The machine of any preceding claim, wherein the module and the base data interfaces comprise cooperating module and base connectors (13,23) for transmitting data in magnetic and/or mechanical form, in particular for transmitting module identification data.

13. The machine of any preceding claim, which comprises a plurality of seats (14') for connecting simultaneously a corresponding plurality of modules (20,20',20"), in particular by a corresponding plurality of base outlets (11), module inlets (21), base interfaces (12,13) and module interfaces (22,23), optionally such a seat (14') may be connected to a module that is not connected to the base outlet (11) such as a user-interface module that is connected to the base via the base and module data interfaces.

14. A removable module (20) for connection to a base (10) of a beverage preparation machine (1) as defined in any preceding claim, having a module inlet (21) and a module data interface (22,23) disconnectably connectable to a base outlet (11) and to a base data interface (12,13), respectively,
**characterised in that** the module (20) has a module connector block (24) for mechanical connection to the base (10), in particular to a corresponding base connector block (14), the module inlet (21) and the module data interface (22,23) being borne, in particular fixedly borne, by the module connector block (14).

15. A base (10) to which is removably connectable a module (20) of a beverage preparation machine (1) as defined in any one of claims 1 to 13, having a fluid circuit for conditioning and delivering a fluid via a base outlet (11) and a base data interface (12,13) disconnectably connectable to a module inlet (21) and to a module data interface (22,23), respectively, of said module,
**characterised in that** the base (10) has a base connector block (14) for mechanical connection to the module (20), the base outlet (11) and the base data interface (12,13) being borne, in particular fixedly borne, by the base connector block (14).

## Patentansprüche

1. Getränkezubereitungsmaschine (1), umfassend:
- eine Basis (10) mit einem Flüssigkeitskreislauf zur Aufbereitung und Abgabe einer Flüssigkeit über einen Auslass (11) der Basis und eine Datenschnittstelle (12, 13) der Basis, insbesondere mit einem Flüssigkeitskreislauf, der mit einer Flüssigkeitsquelle verbunden ist und durch eine Steuereinheit gesteuert wird und eine Pumpe und/oder eine thermische Aufbereitungseinrichtung wie zum Beispiel eine Heizeinrichtung und/oder eine Kühleinrichtung umfasst; und
- ein entfernbares Modul (20) mit einem Moduleinlass (21) und einer Moduldatenschnittstelle (22,23), die entfernbar mit dem Auslass der Basis bzw. der Datenschnittstelle der Basis verbunden werden kann, insbesondere ein Modul mit einer Einheit zur Aufnahme eines Inhaltsstoffes, der mit der Flüssigkeit vermischt werden soll,
**dadurch gekennzeichnet, dass**:
- die Basis (10) einen Basisverbindungsblock (14) zur mechanischen Verbindung mit dem Modul (20) aufweist, wobei der Auslass (11) der Basis und die Datenschnittstelle (12, 13) der Basis vom Basisverbindungsblock (14) getragen wird, insbesondere unbeweglich getragen wird; und/oder
- das Modul (20) einen Modulverbindungsblock (24) zur mechanischen Verbindung mit der Basis (10) aufweist, insbesondere mit einem entsprechenden Basisverbindungsblock (14), wobei der Moduleingang (21) und die Moduldatenschnittstelle (22, 23) vom Modulverbindungsblock (14) getragen werden, insbesondere unbeweglich getragen werden.

2. Maschine nach Anspruch 1, wobei die Basis (10) einen Rahmen (15) aufweist, an welchem der Basisverbindungsblock (14) bewegbar befestigt ist, zum Beispiel schwenkbar befestigt ist, wobei der Basisverbindungsblock (14) insbesondere bezüglich des Rahmens zwischen einer entriegelten Position zur Verbindung und/oder Trennung des Moduls (20) mit/von der Basis (10) und einer verriegelten Position zur Verriegelung des Moduls bei der Verbindung mit der Basis bewegbar ist.

3. Maschine nach Anspruch 1 oder 2, wobei das Modul (20) eine Inhaltsstoffmischeinheit (25) aufweist, die an dem Modulverbindungsblock (24) befestigt ist und in Fluidkommunikation mit dem Moduleingang (21) steht.

4. Maschine nach einem der vorstehenden Ansprüche, wobei die Datenschnittstelle (12, 13) der Basis und die Datenschnittstelle (22, 23) des Moduls entlang einer Richtung (2) der Verbindung und Trennung des Basisausgangs (11) und des Moduleingangs (21) mechanisch miteinander verbunden werden können und getrennt werden können, wobei der Basisausgang (11) und der Moduleingang (21) wahlweise eine Fließrichtung (3) vom Basisausgang in den Moduleingang definiert, wobei die Fließrichtung (3) im Allgemeinen parallel zur Verbindungs- und Trennungsrichtung (2) ist.

5. Maschine nach einem der vorstehenden Ansprüche, die einen Verschluss oder Riegel (4) umfasst, um die Basis (10) und das Modul (20) miteinander zu verbinden, wenn der Basisausgang (11) und der Moduleingang (21) und die Datenschnittstelle der Basis (12, 13) und die Datenschnittstelle des Moduls (22, 23) in dem Verbindungsblock/den Verbindungsblöcken (14, 24) verbunden werden.

6. Maschine nach einem der vorstehenden Ansprüche, wobei das Modul (20) eine Mischeinheit (25) stromabwärts des Moduleinlasses (21) zur Aufnahme eines Inhaltsstoffes umfasst, der stromabwärts des Einlasses mit Flüssigkeit, die in die Einheit über den Basisausgang (11) und den Moduleingang (21) zugeführt wird, zur Bildung einer Mischung, die über einen Maschinenausgang (26) ausgegeben wird und daran gehindert wird, den Basisausgang (11) zu berühren, wobei der Moduleingang (21) insbesondere in Fluidkommunikation mit der Mischeinheit (25) über ein anti-Rückschlagventil und/oder über eine Flüssigkeitsleitung steht, die ein Verhältnis von Länge und Querschnitt aufweist, das ausreichend groß ist, dass ein Rückfluss der Mischung aus der Mischeinheit (25) zum Basisauslass verhindert wird.

7. Maschine nach einem der vorstehenden Ansprüche, wobei die Moduldatenschnittstelle (22, 23) derart angeordnet ist, dass Daten über die Datenschnittstelle (12, 13) der Basis zur Basis kommuniziert werden, um die Aufbereitung und die Abgabe von Flüssigkeit vom Basisausgang (11) in den Moduleingang (21) zu parametrisieren.

8. Maschine nach einem der vorstehenden Ansprüche, wobei die Moduldatenschnittstelle (22, 23) derart angeordnet ist, dass Modulidentifizierungsdaten über die Datenschnittstelle (12, 13) der Basis zur Basis (10) kommuniziert werden, zur Identifizierung eines Modultyps (20), der mit der Basis verbunden ist, aus mehreren unterschiedlichen Modultypen (20, 20',20") wie zum Beispiel unterschiedliche Modultypen zur Bearbeitung von Kaffee, Tee, Milch, Schokolade und Suppe durch die Basis.

9. Maschine nach einem der vorstehenden Ansprüche, wobei die Moduldatenschnittstelle (22, 23) derart angeordnet ist, dass Inhaltsstoffidentifizierungsdaten über die Datenschnittstelle (12, 13) der Basis zur Basis (10) kommuniziert werden, zur Identifizierung eines Inhaltsstoffs, der in dem Modul (20) enthalten ist, das mit der Basis verbunden ist, aus einer Vielzahl von Inhaltsstofftypen, die zur Verarbeitung durch das Modul geeignet sind.

10. Maschine nach einem der vorstehenden Ansprüche, die eine Benutzerschnittstelle umfasst, die mit dem Modul (20) und/oder der Basis (10) verbunden ist, wobei die Basis und die Moduldatenschnittstellen (12, 13, 22, 23) wahlweise zur Kommunikation von Benutzerdaten von einer Benutzerschnittstelle auf dem Modul zur Basis und/oder zur Parametrisierung einer Benutzerschnittstelle auf der Basis linear mit einem bestimmten Modul und/oder Inhaltsstoff, der in dem Modul, das mit der Basis verbunden ist, verwendet wird, verwendet werden können.

11. Maschine nach einem der vorstehenden Ansprüche, wobei das Modul und die Datenschnittstellen der Basis kooperierende Modul- und Basis-Verbinder (12, 22) zur Übertragung von Daten in elektronischer oder optischer Form, insbesondere zur Übertragung von Inhaltsstoffidentifizierungsdaten, umfassen.

12. Maschine nach einem der vorstehenden Ansprüche, wobei das Modul und die Datenschnittstellen der Basis kooperierende Modul- und Basis-Verbinder (13, 23) zur Übertragung von Daten in magnetischer und/oder mechanischer Form, insbesondere zur Übertragung von Modulidentifizierungsdaten, umfassen.

13. Maschine nach einem der vorstehenden Ansprüche, die eine Vielzahl von Plätzen (14') zur gleichzeitigen Verbindung einer entsprechenden Vielzahl von Modulen (20, 20', 20") umfasst, insbesondere durch eine entsprechende Vielzahl von Basisausgängen (11), Moduleingängen (21), Basisschnittstellen (12, 14) und Modulschnittstellen (22, 23), optional kann ein derartiger Platz (14') mit einem Modul verbunden werden, das nicht mit dem Basisausgang (11) verbunden ist, wie zum Beispiel einem Benutzerschnittstellenmodul, das über die Basis- und die Moduldatenschnittstellen mit der Basis verbunden ist.

14. Entfernbares Modul (20) zur Verbindung mit einer Basis (10) einer Getränkezubereitungsmaschine (1) nach einem der vorstehenden Ansprüche, mit einem Moduleingang (21) und einer Moduldatenschnittstelle (22, 23), die entfernbar mit einem Basisausgang (11) bzw. mit einer Basisdatenschnittstelle (12, 13) verbunden werden kann,
**dadurch gekennzeichnet, dass** das Modul (20) einen Modulverbindungsblock (24) zur mechanischen Verbindung mit der Basis (10) aufweist, insbesondere mit einem entsprechenden Basisverbindungsblock (14), wobei der Moduleingang (21) und die Moduldatenschnittstelle (22, 23) vom Modulverbindungsblock (14) getragen werden, insbesondere unbeweglich getragen werden.

15. Basis (10), mit welcher ein Modul (20) einer Getränkezubereitungsmaschine (1) wie in einem der Ansprüche 1 bis 13 definiert entfernbar verbunden werden kann, wie in einem der Ansprüche 1 bis 13 definiert, mit einem Flüssigkeitskreislauf zur Aufbereitung und Ausgabe einer Flüssigkeit über einen Basisausgang (11) und einer Datenschnittstelle (12, 13) der Basis, die entfernbar mit einem Moduleingang (21) bzw. einer Moduldatenschnittstelle (22, 23) des Moduls verbunden werden kann,
**dadurch gekennzeichnet, dass** die Basis (10) einen Basisverbindungsblock (14) zur mechanischen Verbindung mit dem Modul (20) aufweist, wobei der Auslass (11) der Basis und die Datenschnittstelle (12, 13) der Basis vom Basisverbindungsblock (14) getragen wird, insbesondere unbeweglich getragen wird.

## Revendications

1. Machine de préparation de boisson (1) comprenant :
- une base (10) comportant un circuit de fluide pour conditionner et distribuer un fluide par l'intermédiaire d'une sortie de base (11) et une interface de données de base (12,13), en particulier un circuit de fluide connecté à une source de fluide et commandé par une unité de commande et comprenant une pompe et/ou un conditionneur thermique tel qu'un élément chauffant et/ou un refroidisseur ; et
- un module (20) amovible comportant une entrée de module (21) et une interface de données de module (22,23) pouvant être connectée de manière détachable à la sortie de base et à l'interface de données de base, respectivement, en particulier un module comportant une unité pour contenir un ingrédient devant être mélangé avec ledit fluide,
**caractérisée en ce que :**
- la base (10) comporte un bloc connecteur de base (14) pour une connexion mécanique au module (20), la sortie de base (11) et l'interface de données de base (12,13) étant supportées, en particulier supportées fixement, par le bloc connecteur de base (14) ; et/ou
- le module (20) comporte un bloc connecteur de module (24) pour une connexion mécanique à la base (10), en particulier à un bloc connecteur de base (14) correspondant, l'entrée de module (21) et l'interface de données de module (22,23) étant supportées, en particulier supportées fixement, par le bloc connecteur de module (14).

2. Machine selon la revendication 1, la base (10) comportant un cadre (15) sur lequel ledit bloc connecteur de base (14) est monté de manière mobile, par exemple monté de manière pivotante, ledit bloc connecteur de base (14) étant mobile en particulier par rapport au cadre entre une position déverrouillée pour connecter et/ou déconnecter le module (20) à la base (10) et une position verrouillée pour verrouiller le module quand il est connecté à la base.

3. Machine selon la revendication 1 ou 2, dans laquelle le module (20) comporte une unité de mélange d'ingrédients (25) qui est fixée audit bloc connecteur de module (24) et qui est en communication fluidique avec l'entrée de module (21).

4. Machine selon une quelconque revendication précédente, dans laquelle l'interface de données de base (12,13) et l'interface de données de module (22,23) peuvent être connectées et déconnectées mécaniquement le long d'une direction (2) de la connexion et de la déconnexion de la sortie de base (11) et de l'entrée de module (21), la sortie de base (11) et l'entrée de module (21) définissant éventuellement une direction d'écoulement (3) depuis la sortie de base jusque dans l'entrée de module, la direction d'écoulement (3) étant généralement parallèle à la direction de connexion et de déconnexion (2).

5. Machine selon une quelconque revendication précédente, qui comprend une attache ou un verrou (4) pour fixer ensemble la base (10) et le module (20) lors de la connexion de la sortie de base (11) et de l'entrée de module (21) et de l'interface de données de base (12,13) et de l'interface de données de module (22,23) dans le(s) bloc(s) de connexion (14,24).

6. Machine selon une quelconque revendication précédente, dans laquelle le module (20) comprend une unité de mélange (25) en aval de l'entrée de module (21) pour contenir un ingrédient qui est mélangé en aval de ladite entrée avec du fluide introduit dans l'unité par l'intermédiaire de la sortie de base (11) et l'entrée de module (21) afin de former un mélange qui est distribué par l'intermédiaire d'une sortie de machine (26) et qui est empêché d'entrer en contact avec la sortie de base (11), l'entrée de module (21) étant en particulier en communication fluidique avec l'unité de mélange (25) par l'intermédiaire d'un clapet anti-retour et/ou par l'intermédiaire d'un conduit de fluide qui présente un rapport de longueur et de section qui est suffisamment élevé pour empêcher un reflux dudit mélange depuis l'unité de mélange (25) vers la sortie de base.

7. Machine selon une quelconque revendication précédente, dans laquelle l'interface de données de module (22,23) est agencée pour communiquer des données à la base (10) par l'intermédiaire de l'interface de données de base (12,13) afin de paramétrer le conditionnement et la distribution de fluide depuis la sortie de base (11) dans l'entrée de module (21).

8. Machine selon une quelconque revendication précédente, dans laquelle l'interface de données de module (22,23) est agencée pour communiquer des données d'identification de module à la base (10) par l'intermédiaire de l'interface de données de base (12,13) afin d'identifier, sur la base d'un type du module (20) connecté à la base parmi une pluralité de différents types de module (20,20',20"), tels que différents types de modules pour traiter du café, du thé, du lait, du chocolat et de la soupe.

9. Machine selon une quelconque revendication précédente, dans laquelle l'interface de données de module (22,23) est agencée pour communiquer des données d'identification d'ingrédient à la base (10) par l'intermédiaire de l'interface de données de base (12,13) afin d'identifier, sur la base d'un type d'ingrédient contenu dans le module (20) connecté à la base parmi une pluralité de différents types d'ingrédients appropriés pour être traités par le module.

10. Machine selon une quelconque revendication précédente, qui comprend une interface utilisateur connectée au module (20) et/ou à la base (10), les interfaces de données de base et de module (12,13,22,23) pouvant éventuellement être utilisées pour communiquer des données utilisateur depuis une interface de données utilisateur sur le module à la base et/ou paramétrer une interface utilisateur sur la base en cohérence avec un module et/ou un ingrédient particulier utilisé dans le module connecté à la base.

11. Machine selon une quelconque revendication précédente, dans laquelle les interfaces de données de module et de base comprennent des connecteurs de module et de base coopérants (12,22) pour transmettre des données sous forme électrique ou optique, en particulier pour transmettre des données d'identification d'ingrédient.

12. Machine selon une quelconque revendication précédente, dans laquelle les interfaces de données de module et de base comprennent des connecteurs de module et de base coopérants (13,23) pour transmettre des données sous forme magnétique et/ou mécanique, en particulier pour transmettre des données d'identification de module.

13. Machine selon une quelconque revendication précédente, qui comprend une pluralité de sièges (14') pour connecter simultanément une pluralité correspondante de modules (20,20',20"), en particulier par une pluralité correspondante de sorties de base (11), des entrées de module (21), des interfaces de base (12,13) et des interfaces de module (22,23), une tel siège (14') pouvant être éventuellement connecté à un module qui n'est pas connecté à la sortie de base (11) tel qu'un module d'interface utilisateur qui est connecté à la base par l'intermédiaire des interfaces de données de base et de module.

14. Module (20) amovible destiné à être connecté à une base (10) d'une machine (1) de préparation de boissons telle que définie dans une quelconque revendication précédente, ayant une entrée de module (21) et une interface de données de module (22,23) pouvant être connectées respectivement de manière détachable à une sortie de base (11) et à une interface de données de base (12,13),
**caractérisé en ce que** le module (20) comporte un bloc connecteur de module (24) pour une connexion mécanique à la base (10), en particulier à un bloc connecteur de base (14) correspondant, l'entrée de module (21) et l'interface de données de module (22,23) étant supportées, en particulier portées fixement, par le bloc connecteur de module (14).

15. Base (10) à laquelle est connecté de manière détachable un module (20) d'une machine de préparation de boisson (1) ainsi que définie dans l'une quelconque des revendications 1 à 13, comportant un circuit de fluide pour conditionner et distribuer un fluide par l'intermédiaire d'une sortie de base (11) et une interface de données de base (12,13) connectée de manière amovible à une entrée de module (21) et une interface de données de module (22,23), respectivement, dudit module,
**caractérisée en ce que** la base (10) comporte un bloc connecteur de base (14) pour la connexion mécanique au module (20), la sortie de base (11) et l'interface de données de base (12,13) étant portées, en particulier portées de manière fixe, par le bloc connecteur de base (14).
